# EUROPEAN PATENT APPLICATION

(11) **EP 4 730 446 A1**
(43) Date of publication of application: **22.04.2026**
(21) Application number: 24214677.7
(22) Date of filing: 22.11.2024
(51) Int. Cl.: H01M 8/04089, H01M 8/2432, H01M 8/2475, H01M 8/2483, H01M 8/2484, H01M 8/2485, H01M 8/12

(54) **SOLID OXIDE STACK WITH OPEN AIR FLOW CHANNELS**

(30) Priority: 18.10.2024 KR 20240143396
(71) Applicant: Korea Institute of Energy Research, Daejeon 34129 (KR)
(72) Inventor: KIM, Sun-dong, 30126 Sejong-si (KR); CHOI, Yoonseok, 30101 Sejong-si (KR); PARK, Hunmin, 34022 Daejeon (KR); LEE, Seul Hee, 34033 Daejeon (KR); HWANG, Hyo Jung, 35304 Daejeon (KR)
(74) Representative: Sander, Rolf

(57) **Abstract**

Disclosed is a solid oxide stack. The solid oxide stack according to the present invention includes: a module formed by stacking a plurality of unit cells; an upper manifold and a lower manifold installed to support a top surface and a bottom surface of the module, respectively; wherein each unit cell includes a cell frame with a central opening, an air electrode current collector, a solid oxide cell, and a fuel electrode current collector sequentially stacked and seated within the central opening, an interconnect formed on the cell frame having a fuel flow channel on one surface and an air flow channel on the opposite surface, a cell sealant positioned at the interface between the cell frame and the solid oxide cell, and a fuel electrode sealant positioned at the interface between the cell frame and the interconnect; and wherein the air flow channel opens to at least one side of the module. According to the present invention, the stack provides a removable modular unit structure without requiring an air electrode sealant, allowing defective or aged cells to be easily replaced without affecting the stack's overall performance. This simplifies maintenance, extends the stack's lifespan, and reduces operational costs.

## Description

### BACKGROUND

The present invention relates to a solid oxide fuel cell device or a solid oxide electrolysis device and a method for managing the same. More specifically, the invention pertains to a solid oxide stack that allows for easy replacement of defective or aged cells and a method for managing the same.

The solid oxide stack technology refers to high-temperature electrochemical devices that can function as both solid oxide fuel cells (SOFCs) and solid oxide electrolysis cells (SOECs). SOFCs generate electricity and heat through electrochemical reactions using fuel and oxidants, whereas SOECs use electrical energy to decompose water into hydrogen and oxygen, making them widely used for high-efficiency hydrogen production. Both devices utilize solid electrolytes and operate at elevated temperatures.

In SOFCs, hydrogen or hydrocarbon-based fuels supplied to the fuel electrode react with oxygen to generate electricity, water, and heat. In SOECs, electrical energy is used to decompose water to produce hydrogen, offering an effective method for clean hydrogen production. Both SOFCs and SOECs operate at high temperatures, typically between 650°C and 1000°C, enabling high efficiency without requiring precious metal catalysts and allowing the use of various fuels such as hydrogen, natural gas, and carbon monoxide. The high operating temperature also supports internal reforming, maximizing system efficiency.

Additionally, the high operating temperature of SOFCs and SOECs enables combined heat and power (CHP) generation or additional energy production using high-temperature reaction gases. SOFCs have the advantage of simultaneously producing electricity and heat, while SOECs can utilize the high-temperature heat generated during hydrogen production. Due to these versatile applications, SOFCs and SOECs are gaining recognition as next-generation energy sources and clean hydrogen production technologies.

Solid oxide stacks can be implemented in various cell configurations, including planar, tubular, and flat-tubular designs. Among these, planar cells are the most widely used and are stacked in a "stack" structure to produce high-output energy or large-scale hydrogen. The stack includes components such as interconnects to manage fuel and air flow and provide electrical connections, cell frames, and current collectors. The bonding and sealing between these components are critical for determining the efficiency and lifespan of SOFCs. In particular, planar SOFC stacks require sealing structures to isolate the flow of air (or oxygen) through the air electrode channel from the flow of hydrogen (or hydrogen/steam) through the hydrogen electrode channel.

Sealing technology for SOFCs and SOECs typically employs one of three main methods. The first method uses glass-based sealants that melt and irreversibly bond at high temperatures. While widely used, this method makes disassembly and removal after bonding impossible. The second method uses mechanical compression with mica or metal rings, allowing for disassembly but posing risks of gas leakage and increased costs, making it less suitable for commercialization. The third method employs brazing to create a metallurgical bond between metals, requiring high-temperature bonding but being irreversible and increasing process costs.

Both the glass-based sealant method and brazing method are irreversible, making it difficult to individually replace defective or aged cells within a stack. In contrast, the method using mica or metal rings allows for cell replacement but is not well-suited for large-scale commercialization.

Therefore, there is a need for a new sealing structure that facilitates the replacement of defective or aged cells while enhancing the commercial viability of SOFC and SOEC stacks.

### SUMMARY

In conventional solid oxide stacks (SOFC/SOEC), the sealing and assembly methods of the stack present significant challenges for cell replacement. Specifically, glass-based sealant and brazing methods are irreversible, making it difficult to replace only the defective or aged cells within the stack. These structural limitations increase the lifespan-related maintenance costs of the stack and act as a barrier to commercialization. On the other hand, mechanical compression methods using mica or metal rings allow for cell replacement but are not suitable for large-scale commercialization due to issues such as gas leakage and increased costs. Therefore, to overcome the limitations of existing technologies and enable easy replacement of defective or aged cells, the development of a novel structure is necessary.

The present invention aims to address these challenges by proposing an open air electrode structure with a non-adhesive design for the interconnects and cell frames. This design extends the lifespan of the stack, reduces maintenance costs, and enhances its commercial viability.

An embodiment of the present invention provides a solid oxide stack, comprising: a module formed by stacking a plurality of unit cells, where each unit cell includes a cell frame with a central opening; an air electrode current collector, a solid oxide cell, and a fuel electrode current collector sequentially stacked and seated within the central opening; an interconnect formed on the cell frame, having a fuel flow channel on one surface and an air flow channel on the opposite surface; a cell sealant positioned at the interface between the cell frame and the solid oxide cell; and a fuel electrode sealant positioned at the interface between the cell frame and the interconnect, wherein the air flow channel is open to at least one side of the module.

In an embodiment, the solid oxide stack does not include sealants between adjacent modules within the stack.

In an embodiment, the air flow channel is open to both the front and back surfaces of the module.

In an embodiment, the solid oxide stack is configured as a fuel cell.

In an embodiment, the solid oxide stack is configured as an electrolysis device.

In an embodiment, an insulator is positioned between adjacent unit cells.

An embodiment of the present invention provides a method for managing the solid oxide stack, comprising: removing a fixing device securing the stack when one of the unit cells becomes aged or defective; removing the aged or defective unit cell; inserting a new unit cell into the stack; and reassembling the fixing device to complete the replacement process.

An embodiment of the present invention provides a solid oxide stack, comprising: a module formed by stacking a plurality of unit cells, each module having an air inlet and outlet on at least one side of the module; and upper and lower manifolds installed at the top and bottom of the module, respectively.

### BRIEF DESCRIPTION OF THE FIGURES

The accompanying drawings are included to provide a further understanding of the inventive concept, and are incorporated in and constitute a part of this specification. The drawings illustrate exemplary embodiments of the inventive concept and, together with the description, serve to explain principles of the inventive concept. In the drawings:
FIG. 1 is a schematic perspective view of a solid oxide stack according to an embodiment of the present invention.
FIG. 2 is a schematic exploded perspective view of a solid oxide stack according to an embodiment of the present invention.
FIG. 3 shows a schematic perspective view (A) and an exploded perspective view (B) of a conventional solid oxide stack.
FIG. 4 is a schematic plan view of a cell frame.
FIGs. 5 and 6 are a schematic plan view and a rear view of the interconnect, respectively.
FIG. 7 is a reference diagram illustrating the process of replacing a unit cell in the event of aging or a defect.

### DETAILED DESCRIPTION

The various embodiments of the present invention, along with their structures and the effects derived therefrom, are described in detail below with reference to the accompanying drawings. In the explanation of the present invention, well-known functionalities or configurations that may unnecessarily obscure the essence of the invention to those skilled in the art are omitted.

Throughout the patent document, when one part is described as being "connected (attached, contacted, coupled)" to another part, it includes both cases where the connection is "direct" and where it is "indirect" with an intermediary component in between. Furthermore, when a part is described as "including" a component, unless otherwise explicitly stated, it does not exclude other components but rather allows for additional components to be included.

The terms used in this patent document are intended only to describe specific embodiments and are not intended to limit the invention. Singular expressions include plural meanings unless the context explicitly dictates otherwise. Terms such as "include" or "have" are intended to specify the presence of features, numbers, steps, operations, components, parts, or combinations thereof described in the specification but do not preclude the possibility of the presence or addition of one or more other features, numbers, steps, operations, components, parts, or combinations thereof.

Hereinafter, the embodiments of the present invention are described in detail with reference to the accompanying drawings.

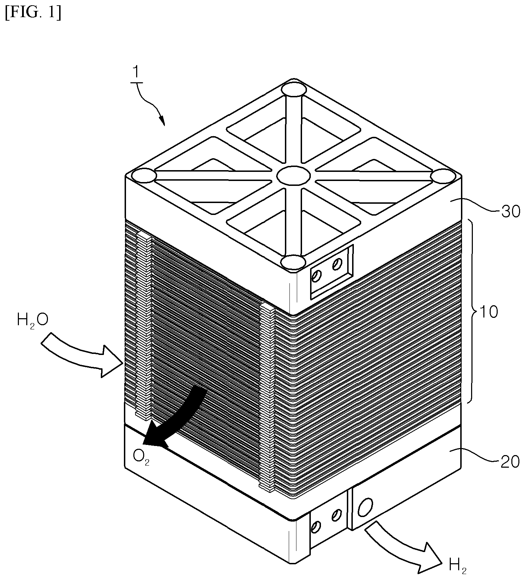

FIG. 1 is a schematic perspective view of a solid oxide stack (1) according to an embodiment of the present invention.

The solid oxide stack of the present invention is a device that operates at high temperatures (700°C to 1000°C) using a solid oxide electrolyte with oxygen or hydrogen ion conductivity. The solid oxide stack of the present invention can be used as a fuel cell or an electrolysis device.

A solid oxide fuel cell typically consists of an oxygen-ion-conducting electrolyte, an air electrode (anode), and a fuel electrode (cathode) positioned on either side of the electrolyte. In the air electrode, oxygen is reduced to generate oxygen ions, which migrate through the electrolyte to the fuel electrode. At the fuel electrode, the oxygen ions react with hydrogen supplied to produce water. During this process, electrons are generated at the fuel electrode and consumed at the air electrode, creating an electric current when the two electrodes are connected.

In contrast, an electrolysis device operates in the opposite manner. Electrical energy is applied to decompose water into hydrogen and oxygen at high temperatures. Specifically, in the electrolysis device, water is oxidized at the anode to produce oxygen (O₂ ), hydrogen ions (H⁺), and electrons. At the cathode, hydrogen ions gain electrons to form hydrogen (H₂ ) gas. This process produces both hydrogen and oxygen simultaneously, with the overall reaction being the decomposition of water (H₂ O) into hydrogen (H₂ ) and oxygen (O₂ ).

In the case of high-temperature solid oxide electrolysis devices, oxygen ions (O²⁻) migrate through the electrolyte, enabling the reaction to occur efficiently. These devices maintain high current density and stability at elevated temperatures, which is a significant advantage.

Referring to FIG. 1, a solid oxide stack (1) according to one embodiment of the present invention includes a module (10), where fuel cell or electrolysis reactions occur, and lower and upper manifolds (20 and 30) located at the bottom and top of the module (10), respectively. In the module (10), components are stacked vertically, connecting the fuel conduits from top to bottom. Fuel enters and exits the stack through the lower manifold (20) or upper manifold (30).

Meanwhile, the module (10) of the solid oxide stack (1) according to an embodiment of the present invention features an open air electrode structure, where an air (oxygen) inlet and outlet are formed on one side.

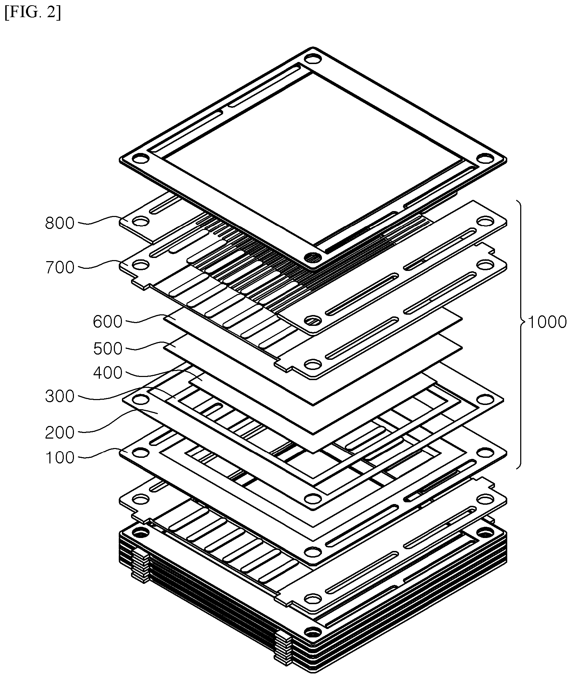

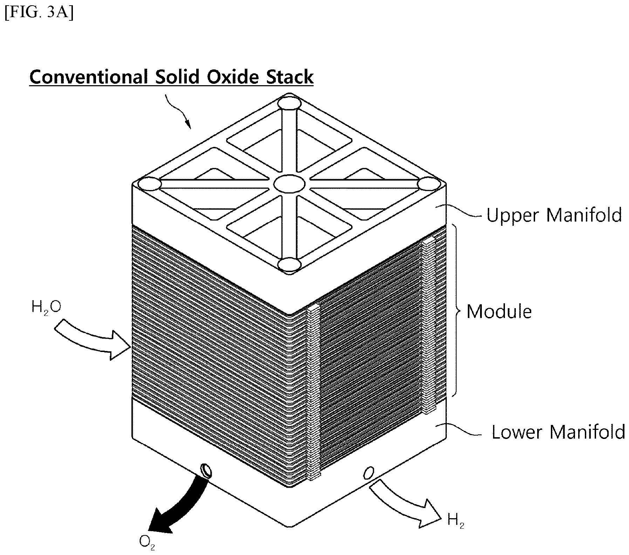

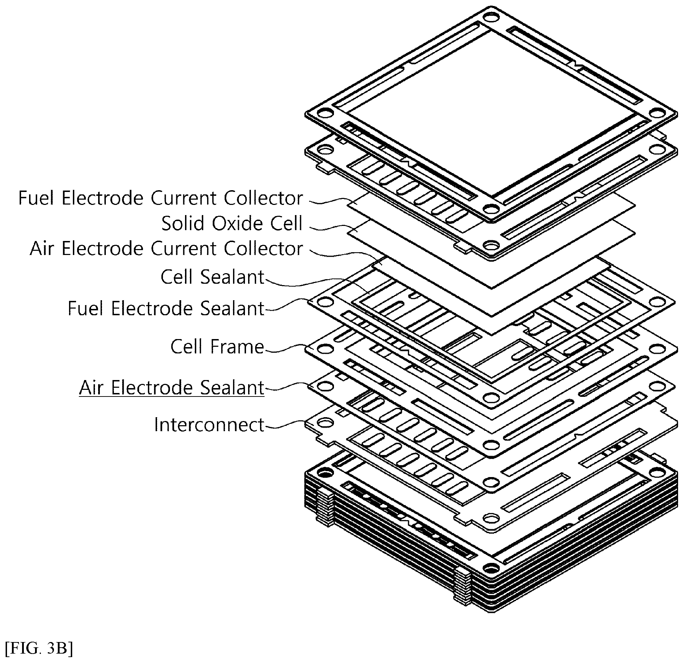

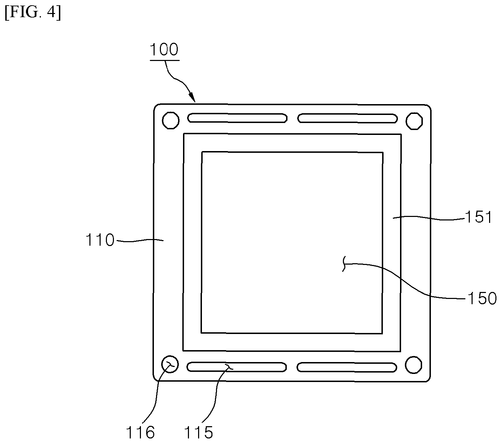

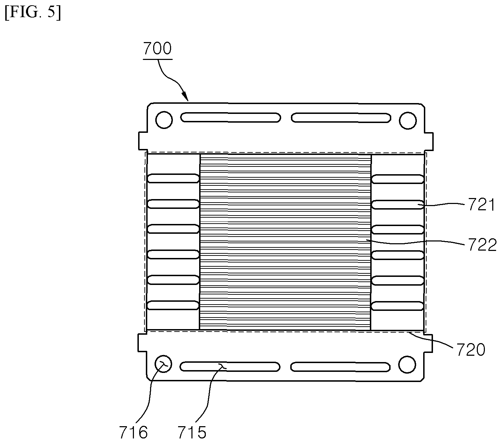

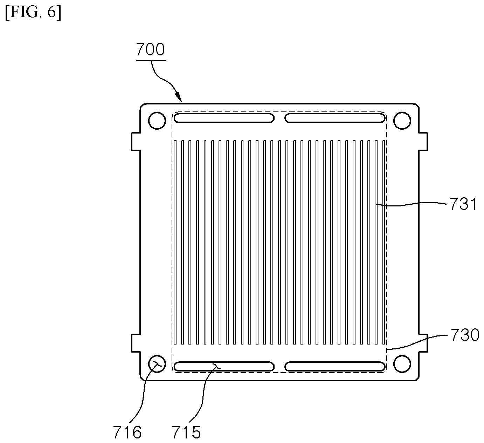

FIG. 2 is a schematic exploded perspective view of a solid oxide stack according to an embodiment of the present invention, and FIG. 3 illustrates a schematic perspective view (A) and an exploded perspective view (B) of a conventional solid oxide stack. FIG. 4 is a schematic plan view of a cell frame, while FIGs. 5 and 6 are a schematic plan view and a rear view of the interconnect, respectively.

The structure of the solid oxide stack according to an embodiment of the present invention is described with reference to FIG. 2. Differences between this stack and conventional solid oxide stacks are clearly explained with reference to FIG. 3.

Referring to FIG. 2, the module (10) of the solid oxide stack (1) according to an embodiment of the present invention includes a cell frame (100), a fuel electrode sealant (200), a cell sealant (300), an air electrode current collector (400), a solid oxide cell (500), a fuel electrode current collector (600), an interconnect (700), and an insulator (800).

A central opening (150) is formed in the cell frame (100). Guides (151) are formed around the central opening (150), on which the air electrode current collector (400), the solid oxide cell (500), and the fuel electrode current collector (600) are seated. Through the central opening, the central portion of the lower surface of the air electrode current collector (400) is exposed toward the interconnect (700) located below, while the upper surface of the air electrode current collector (400) contacts the solid oxide cell (500). The other surface of the solid oxide cell (500) is formed to contact the fuel electrode current collector (600).

The solid oxide cell (500) includes a fuel electrode and an air electrode, with a dense electrolyte positioned between them. The solid oxide cell (500) may be a rectangular planar cell. The electrolyte must have a dense structure to prevent mixing of fuel and gas, with high oxygen ion conductivity and low electronic conductivity. The electrolyte may be composed of at least one material selected from ceria-based or lanthanum gallate-based materials. The material of the cathode of the planar cell in the present invention is a composite of an ion-conductive electrolyte material and one material selected from nickel, nickel alloys, copper, copper alloys, and iron-based alloys. The ion-conductive electrolyte material may include one or more materials selected from yttria-stabilized zirconia (YSZ), scandia-stabilized zirconia (ScSZ), gadolinium-doped ceria (GDC), samarium-doped ceria (SDC), and lanthanum gallates. The electrolyte material may also include Y₂ O₃ -doped zirconia or zirconia doped with Y, Sc, or Yb; ceria doped with Y, Gd, or Sm; and LaGaOs doped with Sr and Mg. The material of the anode is selected from ceramics and composites of ceramics and ion-conductive electrolyte materials. The ceramic may include one or more materials selected from strontium titanium ferrite (STF), lanthanum strontium ferrite (LSF), lanthanum strontium cobaltite (LSC), strontium cobalt ferrite (SFC), barium strontium cobalt ferrite (BSCF), lanthanum strontium cobalt ferrite (LSCF), and lanthanum nickelate (LNO). The ion-conductive electrolyte material for the anode may include one or more materials selected from zirconia doped with Y, Sc, or Yb; ceria doped with Y, Gd, or Sm; and LaGaO₃ doped with Sr and Mg.

A fuel inlet/outlet (115) is formed on the edge (110) of the cell frame (100), and fixing holes (116), through which fixing bars for securing the stacked stack pass, are formed at the corners of the edge (110). For example, the stack can be secured by inserting the fixing bars into the fixing holes (116) and tightening them with nuts and bolts. In the present invention, due to the open air electrode structure, an air inlet/outlet may not be formed on the edge (110) of the cell frame (100).

A cell sealant (300) is positioned at the interface where the cell frame (100) and the solid oxide cell (500) contact each other. The cell sealant (300) can be selected from at least one material in a group consisting of glass, mica, and glass-mica hybrid materials. However, the present invention is not limited to the materials used for sealing, and other materials or methods that can achieve the sealing effect may also be used.

A fuel electrode sealant (200) is formed on the upper portion of the cell frame (100). The fuel electrode sealant (200) bonds the cell frame (100) to the interconnect (700). The fuel electrode sealant (200) has an opening in its center, and the center of the fuel electrode sealant (200) accommodates the fuel electrode current collector (600), which is formed to contact one surface of the solid oxide cell (500). Fixing holes are also formed at the edges of the fuel electrode sealant (200), similar to the cell frame. The fuel electrode sealant (200) can be selected from at least one material in a group consisting of glass, mica, and glass-mica hybrid materials. However, the present invention is not limited to the materials used for sealing, and other materials or methods that can achieve the sealing effect may also be used.

One surface of the interconnect (700) (refer to FIG. 5) is formed with an air flow channel, while the opposite surface (refer to FIG. 6) is formed with a fuel flow channel. At the edges of the interconnect (700), fuel inlets/outlets (715) are formed, and fixing holes (716), through which supports for securing the stacked stack pass, are formed at the corners.

First, the air flow channel will be described with reference to FIG. 5. The air flow channel (720) opens to at least one side of the module (10). As shown in FIG. 5, it may open to both one side and the opposite side of the module (10). The air flow channel (720) is formed by machining a portion of one surface of the interconnect (700) and includes ribs (721) and a first partition wall (722). The ribs (721) and the first partition wall (722) may protrude from the machined surface. The air flow channel may be formed as an elongated, unidirectional passage.

As shown in FIG. 6, the fuel flow channel (730) is formed on the rear surface of the interconnect (700). The fuel flow channel (730) guides fuel from the fuel inlet/outlet (715) to the fuel electrode of the solid oxide cell (500). The fuel flow channel (730) includes a second partition wall (731), which is elongated in one direction, allowing fuel entering from one fuel inlet/outlet (715) to exit through the opposite fuel inlet/outlet (715). The air flow channel and the fuel flow channel may be oriented in different directions (e.g., perpendicular to each other).

The cell frame (100), fuel electrode sealant (200), cell sealant (300), air electrode current collector (400), solid oxide cell (500), fuel electrode current collector (600), and interconnect (700) described above together constitute a single unit cell (1000). The module (10) of the solid oxide stack (1) according to an embodiment of the present invention is formed by stacking multiple such unit cells (1000). Between each unit cell (1000), there is no sealing, and an insulator (800) is positioned. The insulator (800) may be formed by coating an insulating material on the interconnect (700). As can be observed by comparing FIG. 2 and FIG. 3(B), the module (10) of the solid oxide stack (1) according to an embodiment of the present invention does not use an air electrode sealant, unlike conventional solid oxide stacks.

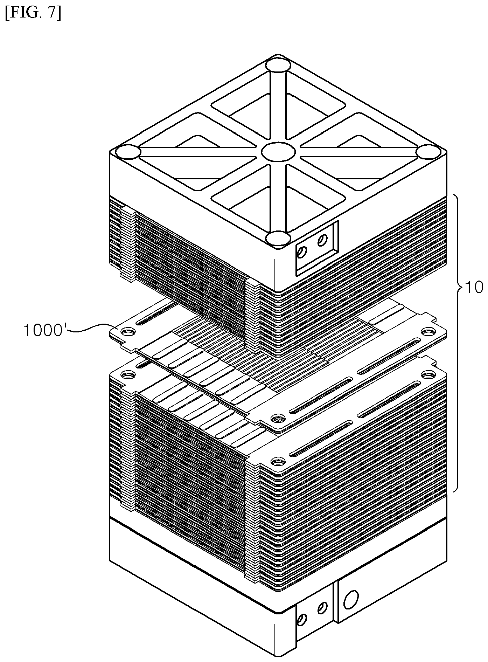

It is important to note that the insulator (800) is distinct from the air electrode sealant. Unlike a sealant, the insulator (800) is not permanently bonded to at least the adjacent unit cells (1000). Because of this, as shown in FIG. 7, if any one of the unit cells (1000') in the module (10) becomes aged or defective, it is possible to replace only that unit cell (1000'). Specifically, if a unit cell (1000') becomes aged or defective, the fixing device securing the stacked stack can be removed, the aged or defective unit cell can be taken out, a new unit cell can be inserted, and the fixing device can be reassembled to complete the replacement of the aged or defective unit cell.

According to the present invention, the solid oxide stack adopts an open air electrode structure, providing removable unit cells without the need for an air electrode sealant while maintaining stack performance. This allows for the easy replacement of only the defective or aged cells when issues arise, playing a crucial role in extending the stack's lifespan. It enables continued system operation by replacing specific components without the need to replace the entire stack.

According to the present invention, the solid oxide stack simplifies the sealing method from a three-point sealing system (air electrode, fuel electrode, cell sealant) to a two-point sealing system (fuel electrode, cell sealant), reducing the usage of sealants. This leads to reduced material costs and significantly lowers assembly and maintenance costs due to the simplified structure.

According to the present invention, the open air electrode structure of the solid oxide stack eliminates the need for a complex sealing system and allows natural connection of airflow to the external environment, simplifying operation and assembly processes. Furthermore, it minimizes gas leakage issues, enhancing reliability during long-term operation.

According to the present invention, the structure of the solid oxide stack is advantageous for modularization and scalability. The open air electrode structure allows multiple stacks to be easily connected to implement large-scale systems, simplifying the piping structure and facilitating installation and operation in large commercial or industrial systems.

According to the present invention, the solid oxide stack eliminates the need for an air electrode sealant, reducing sealant damage issues in high-temperature environments. Additionally, defective or aged cells can be individually replaced during stack operation, extending maintenance cycles and reducing costs.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

### [Description of reference numerals]

1: Solid oxide stack
10: Module
20: Lower manifold
30: Upper manifold
100: Cell frame
115: Fuel inlet/outlet
116: Fixing hole
150: Central opening
151: Guide
200: Fuel electrode sealant
251: Guide
300: Cell sealant
400: Air electrode current collector
500: Solid oxide cell
600: Fuel electrode current collector
700: Interconnect
715: Fuel inlet/outlet
716: Fixing hole
720: Air flow channel
721: Rib
722: First partition wall
730: Fuel flow channel

## Claims

1. A solid oxide stack, comprising:
a module formed by stacking a plurality of unit cells;
an upper manifold and a lower manifold installed to support a top surface and a bottom surface of the module, respectively;
wherein each unit cell includes the following components:
a cell frame with a central opening;
an air electrode current collector, a solid oxide cell, and a fuel electrode current collector sequentially stacked and seated within the central opening;
an interconnect formed on the cell frame, having a fuel flow channel on one surface and an air flow channel on the opposite surface;
a cell sealant positioned at the interface between the cell frame and the solid oxide cell; and
a fuel electrode sealant positioned at the interface between the cell frame and the interconnect,
wherein the air flow channel opens to at least one side of the module.

2. The solid oxide stack of claim 1, wherein no sealant is formed between adjacent modules in the stack.

3. The solid oxide stack of claim 1, wherein the air flow channel opens to both the front and rear surfaces of the module.

4. The solid oxide stack of claim 1, wherein an insulator is positioned between adjacent unit cells.

5. A solid oxide stack, comprising:
a module formed by stacking a plurality of unit cells;
an upper manifold and a lower manifold installed to support a top surface and a bottom surface of the module, respectively;
wherein air flows into and out of at least one side of the module.

6. A method for managing a solid oxide stack, the solid oxide stack comprising:
a module formed by stacking a plurality of unit cells;
an upper manifold and a lower manifold installed to support a top surface and a bottom surface of the module, respectively;
wherein each unit cell includes the following components:
a cell frame with a central opening;
an air electrode current collector, a solid oxide cell, and a fuel electrode current collector sequentially stacked and seated within the central opening;
an interconnect formed on the cell frame, having a fuel flow channel on one surface and an air flow channel on the opposite surface;
a cell sealant positioned at the interface between the cell frame and the solid oxide cell; and
a fuel electrode sealant positioned at the interface between the cell frame and the interconnect,
wherein the air flow channel opens to at least one side of the module;
